Europäisches Patentamt

European Patent Office

Office européen des brevets

(11) Veröffentlichungsnummer: **0 460 247 A1**

(12) **EUROPÄISCHE PATENTANMELDUNG**

(21) Anmeldenummer: 90110521.3

(22) Anmeldetag: 02.06.90

(51) Int. Cl.⁵: **H01S 3/0915**, H01S 3/042

(43) Veröffentlichungstag der Anmeldung:
**11.12.91 Patentblatt 91/50**

(84) Benannte Vertragsstaaten:
**AT BE CH DE DK ES FR GB GR IT LI LU NL SE**

(71) Anmelder: **LASERS INDUSTRIELS S.A. L.I.S.A.**
**96, route de Marzy**
**F-58003 Nevers(FR)**

(72) Erfinder: **Beck, Rasmus, Dr.**
**Nachtigallenstrasse 62**
**W-6078 Neu-Isenburg(DE)**
Erfinder: **Aubert, Philippe**
**26 Rue Saint-Lambert**
**F-75015 Paris(FR)**

(74) Vertreter: **Rupprecht, Klaus, Dipl.-Ing.**
**Kastanienstrasse 18**
**W-6242 Kronberg(DE)**

(54) **Festkörperlaser mit HF-angeregter Pumplichtquelle und integriertem Kühlsystem.**

(57) Zur Verbesserung der Betriebseigenschaften eines Festkörperlasers, insbesondere eines Nd:YAG-Lasers wird vorgeschlagen, den Laserkristall in ein optisches Anregungssystem zu integrieren. Das Anregungssystem besteht aus einer strömungsgekühlten Hochfrequenzentladung in einem Edelgas, z. B. Xe oder Kr. Das Anregungssystem ist mit den zugehörigen Kühleinrichtungen koaxial um den auf der optischen Achse befindlichen Laserkristall angeordnet.

Fig. 1

Die Erfindung bezieht sich auf einen Festkörperlaser mit HF-angeregter Pumplichtquelle, die mit einem Gasumweltsystem mit Wärmetauscher zur Abführung der Entladungswärme ausgerüstet ist. Insbesondere betrifft sie einen optisch gepumpten Festkörperlaser hoher mittlerer Ausgangsleistung von etwa 400 bis 500 W. Das aktive Material besteht dabei aus einem stabförmigen oder quaderförmigen (Slab) Kristall mit spezifischer Dotierung. In Betracht kommen hier z. B. Nd:YAG, Alexandrit oder Nd,Cr:GSGG. Festkörperlaser gewinnen heute immer mehr an Bedeutung, da jetzt Geräte mit Ausgangsleistungen von 1 kW und mehr zur Verfügung stehen. Dabei ist eine weitere Erhöhung der Ausgangsleistung, eine Steigerung der Zuverlässigkeit und eine Reduzierung der Wartungsintervalle von besonderer Wichtigkeit.

Bekannte Festkörperlaser werden entsprechend dem Stand der Technik mittels Blitzlampen oder Dauerstrich-Bogenlampen angeregt. Dabei werden Laserstab und Pumplampe in einer einfach- oder doppelelliptischen Reflektorkammer oder aber auch in einem kreiszylindrischen diffus reflektierenden Rohr angeordnet. Die von der Pumplampe emittierte Strahlung wird über diese Reflektoranordnungen mehr oder weniger verlustbehaftet auf den Laserkristall gerichtet. Bekannt sind auch rohrförmige Pumplampen, in die der Laserkristall koaxial eingeführt werden kann. Diese Anordnung hat den Vorteil, daß die Pumpstrahlung sehr gleichmäßig von allen Seiten auf den Kristall einfällt.

Zur Erzielung einer hohen Ausgangsleistung (400 bis 500 W) muß der Laserkristall mit einer vergleichsweise sehr hohen Pumpleistung angeregt werden. Die Pumplampen müssen im allgemeinen an der Grenze ihrer technischen Leistungsgrenze betrieben werden, was sich nachteilig auf deren Lebensdauer auswirkt. Üblich ist eine Lampenlebensdauer von maximal $5 * 10^6$ Impulsen. Bei einer Betriebsfrequenz von 400 Hz und einem 2-Schicht-Betrieb einer industriellen Laseranlage ist die Lampenlebensdauer bereits nach einem Tag erreicht. Die Folge sind Betriebsunterbrechungen wegen Lampenwechsel und unterschiedliche Verfahrensparameter, da am Ende der Lampenlebensdauer nur noch eine reduzierte Leistung zur Verfügung steht. Ein Grund für die Begrenzung der Lebensdauer ist die sehr hohe spezifische Leistung, die in der Lampe umgesetzt wird. Dadurch werden die Materialien (Elektroden, Lampenrohr, Einschmelzungen) extremen Belastungen ausgesetzt, die eine frühzeitige Alterung bewirken.

Eine Erhöhung der Lampenlebensdauer läßt sich verwirklichen, wenn auf die Elektroden mit ihren Einschmelzungen verzichtet werden kann. Die Anregung des Lampengases wird dann vorteilhaft mittels Hochfrequenz-Energie bewirkt. Diese kann durch außerhalb des Entladungsraumes angebrachte großflächige Elektroden kapazitiv in das Innere des Rohres eingekoppelt werden, wodurch Verunreinigungen des Gases ausgeschlossen werden. Entsprechende Anordnungen sind aus der Patentliteratur bekannt; deutsches Gebrauchsmuster G 86 06 977.2.

Besonders günstig ist es, eine derartige Entladung in einem schnell strömenden Gas zu betreiben, da dann die Kühlung des Gases mittels Wärmetauscher erfolgen kann. Die thermische Wandbelastung des Entladungsrohres wird damit wesentlich reduziert, und das zur Verfügung stehende Gasvolumen wird vergrößert. Eine solche Entladungsanordnung ist aus der DE 33 44 714 Al bekannt. Diese wird dort jedoch zur Anregung eines $CO_2$-Laser-Gasgemisches eingesetzt. Bei dieser Anordnung übernimmt ein schnelllaufendes Radialgebläse die Umwälzung des Gasgemisches. Das Gebläserad ist ebenso wie die Motorwelle durchbohrt und koaxial zum Laserresonator angeordnet. Das Gas wird über einen konzentrisch um das Entladungsrohr herum angebrachten Wärmetauscher geleitet und auf kürzestem Weg wieder in das Entladungsrohr zurückgeführt.

Der Erfindung liegt nun die Aufgabe zugrunde, einen Festkörper-Laser der eingangs genannten Art zu realisieren, bei dem eine Entladungsanordnung mit schnellem Gasaustausch und Hochfrequenz (HF)-Anregung eingesetzt wird, so daß insbesondere aufgrund der so erzielbaren Kühlung des Gases und der Bauelemente eine hohe mittlere Ausgangsleistung bei vergleichsweise langer ununterbrochener Betriebsdauer erzielt werden kann.

Diese Aufgabe ist gemäß der Erfindung durch die Merkmale des kennzeichnenden Teils des Patentanspruchs 1 gelöst. Es wird hierbei ein Laserkristall, vorzugsweise in Form eines zylindrischen Stabes, innerhalb der Pumplichtquelle angeordnet, wobei das zu Erzeugung des Pumplichtes eingesetzte Gas in einem Kreislauf mittels eines Gebläses umgewälzt und gekühlt wird.

Gemäß der Erfindung ist die Pumplichtquelle durch ein an beiden Seiten offenes Rohr aus dielektrischem Material gebildet, an dessen Außenwand streifenförmige Elektroden. vorzugsweise zwei Elektroden, zur Ankopplung von HF-Leistung angebracht sind und durch das das Gas geleitet wird. Das Festkörper-Lasermaterial, in der Regel ein stabförmiger Laserkristall, wird mittels speichenartiger Fixierungselemente vorzugsweise koaxial im Rohr angeordnet, so daß bei Einsatz von zwei bis drei Speichen eine im wesentlichen ungestörte Gasströmung im Rohr zwischen Laserkristall und Rohrinnenwandung stattfinden kann.

Weitere Einzelheiten, Merkmale und Vorteile der Erfindung ergeben sich aus der folgenden Beschreibung mehrerer Ausführungsbeispiele sowie anhand der Beschreibung und der Patentansprüche.

Es zeigen:

Fig. 1. ein Ausführungsbeispiel der Erfindung im Längsschnitt, wobei der Laserkristall innerhalb eines gasdurchströmten Rohres angeordnet ist;

Fig. 2 die gleiche Ansicht wie in Fig. 1 mit einem Laserkristall, der durch Anordnung in einem weiteren Rohr mit einer Flüssigkeitskühlung versehen ist und

Fig. 3 eine Zwillingsanordnung der erfindungsgemäßen Vorrichtung gemäß Fig. 1

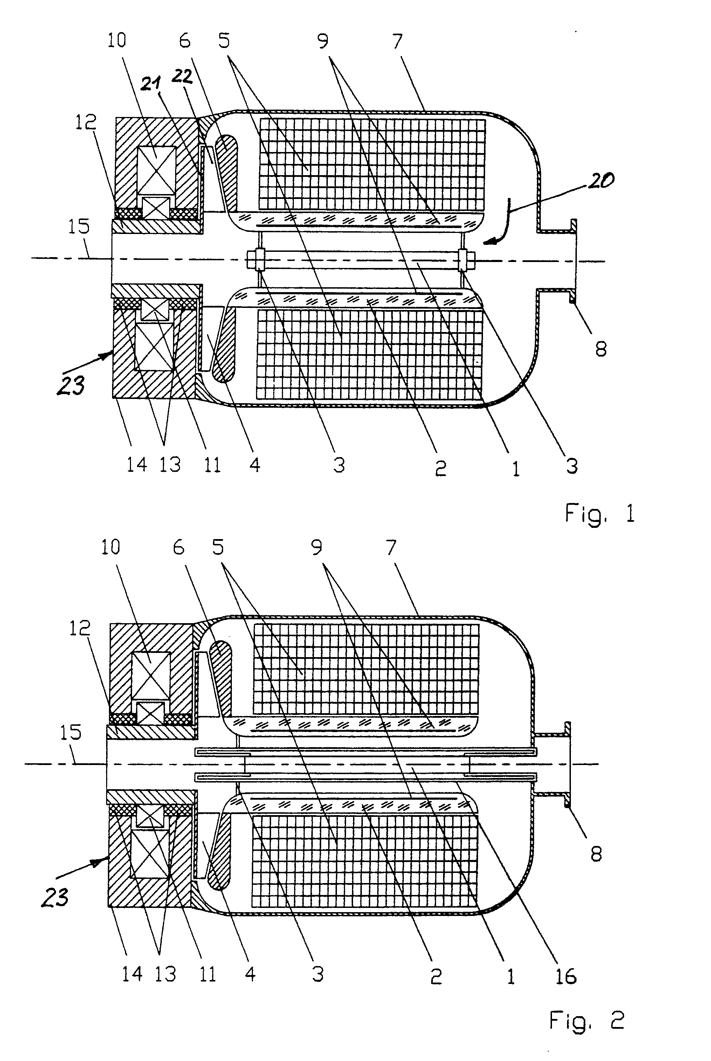

Entsprechend Fig. 1 weist ein Anregungsmodul oder Festkörperlaser ein Festkörper-Lasermaterial 1 oder einen Laserkristall auf, der in einem Entladungsraum angeordnet, vorzugsweise auf dessen Achse 15 angeordnet ist. Im einfachsten Fall (wie in Fig. 1 dargestellt) hat dieses Material die Form eines zylindrischen Stabes. Dieser Stab wird zentrisch in einem Rohr 2 mittels zweier Befestigungselemente 3 aufgehängt. Durch das Rohr 2 wird ein Gas, vorzugsweise Edelgas, geleitet. Dieses Gas wird mittels des Turbo-Gebläses 4 im geschlossenen Kreislauf von dem Rohr 2 zu einem konzentrisch um das Rohr 2 angeordneten Wärmetauscher 5 und zurück gefördert. Es strömt dabei in Richtung des Pfeiles 20. Das Gebläse 4 besteht aus einer Scheibe 21 mit aufgesetzten Schaufeln 22. Es ist mit einer feststehenden Scheibe 6 abgedeckt, die am Rohr 2 angeordnet ist. Der Spalt zwischen den Gebläseschaufeln und der Deckscheibe 6 beträgt nur 0,2 - 0,3 mm, so daß die Gasrückströmung durch diesen Spalt vernachlässigt werden kann. Der gesamte Gasführungskreislauf ist in dem Gehäuse 7 untergebracht. An dem Verbindungsflansch 8 kann entweder ein Resonatorspiegel oder aber eine weitere Anregungseinheit mit eigenem Gaskreislauf, wie soeben beschrieben, angeschlossen werden.

Die Anregung des im Raum zwischen dem Lasermaterial und der Innenwand des Rohres 2 strömenden Gases erfolgt durch ein Hochfrequenzfeld, das durch die in der Rohrwandung eingebetteten Elektroden 9 aufgebaut wird. Das Entladungsrohr 2 ist deshalb aus einem dielektrischen Material mit geringem Verlustfaktor hergestellt. Außerdem sollte die Innenwand vorzugsweise eine hohe optische Reflexion aufweisen, um die Pumpstrahlung möglichst verlustfrei auf den Laserkristall 1 zu bringen.

Ein Motor 23 zum Antrieb des Gebläses 4 mit einem Stator 10, Läufer 11, Hohlwelle 12, den Lagern 13 und einem Gehäuse 14 ist für eine Drehzahl von 15.000 bis 30.000 ausgelegt. Ein Lager 13 ist vorteilhafterweise als Gaslager ausgelegt, um die Reibung zu vermindern und Verschmutzungen des Gases durch Schmiermittel von Kugellagern auszuschließen.

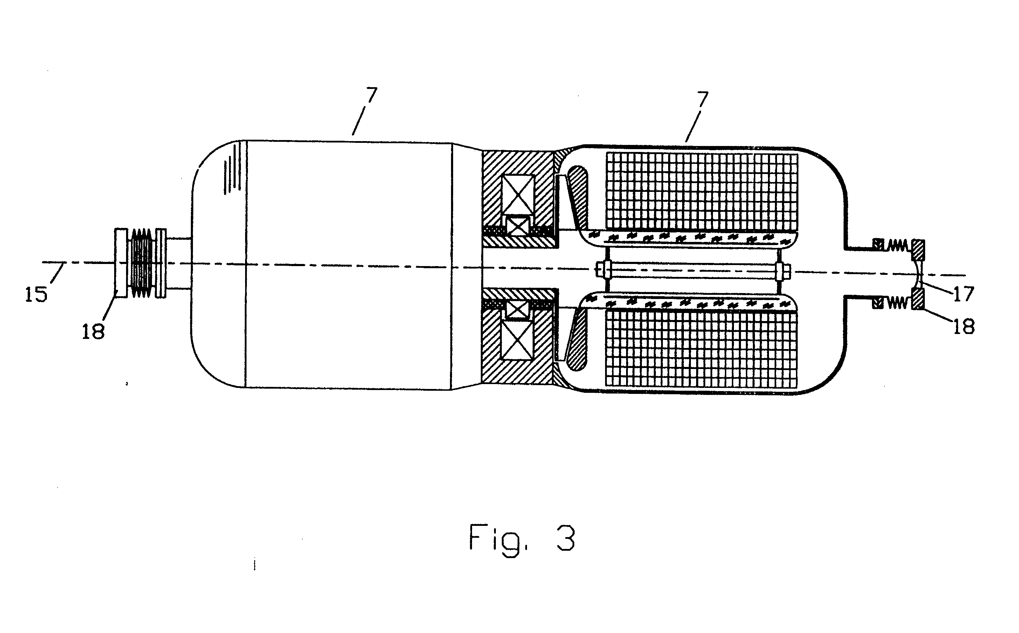

Die gesamte Anordnung ist koaxial zur optischen Achse 15 aufgebaut. Zur Erhöhung der Ausgangsleistung kann ein zweites Gebläse mit Umwälz- und Anregungseinheit an das linke Wellenende angebaut werden, so daß ein Zwillingsmodul entsteht. Von diesen Zwillingsmodulen können je nach Bedarf mehrere auf der optischen Achse (15) aufgereiht werden (Fig. 3).

Der Kühlkreis eines Anregungsmoduls umfaßt neben dem Wärmetauscher 5 auch die Gebläsedeckscheibe 6, sowie das Motorgehäuse 14. Die entsprechenden Verbindungen sind in der Fig. 1 nicht eingezeichnet. Zweckmäßigerweise wird auch der Laserkristall an das Kühlsystem angeschlossen (nicht gezeigt). Er wird dazu in ein transparentes Rohr 16, vorzugsweise aus Quarzglas, eingebaut, das von Kühlwasser durchströmt wird. Diese Anordnung ist in Fig. 2 dargestellt. Wie sich aus der Fig. 2 ergibt, ist das transparente Rohr 16 an seinem einen Ende im Bereich des Flansches 8 im Gehäuse 7 angeordnet, während es im gegenüberliegenden Bereich an der Halterung oder den Befestigungselementen 3 gemäß Fig. 1 befestigt ist. Diese Befestigungselemente 3 sind speichenartig ausgebildet.

Vorzugsweise sind zwei bis vier Speichen vorhanden, die der Strömung im Gasrohr vergleichsweise geringen Widerstand entgegensetzen.

Fig. 3 zeigt ein oben erwähntes Zwillingsmodul mit zwei Gasführungsgehäusen 7. An dem Verbindungsflansch 8 des jeweiligen Gehäuses 7 ist ein Laserspiegel 17 in einer justierbaren Fassung 18 angebracht. Falls gewünscht, können zwischen den Laserspiegeln 17 weitere Zwillingsmodule auf der optischen Achse 15 aneinander angereiht werden.

Vorstehend ist somit ein Festkörperlaser, insbesondere ein Nd:YAG-Laser beschrieben, bei dem zur Verbesserung der Betriebseigenschaften, insbesondere der Standzeit, ein integriertes Kühlsystem vorgeschlagen ist. Das Anregungssystem besteht aus einer strömungsgekühlten Hochfrequenzentladungseinrichtung in einem Edelgas, z. B. Xe oder Kr. Das optische Anregungssystem ist mit den zugehörigen Kühleinrichtungen koaxial um den auf der optischen Achse befindlichen Laserkristall angeordnet.

## Patentansprüche

1. Festkörperlaser mit HF-angeregter Pumplichtquelle, die mit einem Gasumwälzsystem mit Wärmetauscher (5) zur Abführung der Entladungswärme versehen ist, dadurch gekennzeichnet, daß ein Festkörper-Lasermaterial (1) innerhalb der Pumplichtquelle (2, 9) angeordnet ist und daß das zur Erzeugung des Pumplichts eingesetzte Gas in einem Kreislauf mittels eines Gebläses (4, 6) umgewälzt und über den Wärmetauscher (5) geleitet wird.

2. Festkörperlaser nach Anspruch 1, dadurch gekennzeichnet, daß die Pumplichtquelle (2, 9) durch ein an beiden Enden offenes Rohr (2) aus dielektrischem Material gebildet wird, an dessen Außenwand Elektroden (9) zur Ankopplung von HF-Leistung angebracht sind und durch das das Gas geleitet wird.

3. Festkörperlaser nach Anspruch 1 oder 2, dadurch gekennzeichnet, daß zwei streifenförmige Elektroden (9) vorgesehen sind.

4. Festkörperlaser nach Anspruch 2, dadurch gekennzeichnet, daß das Rohr (2) in dem für die Pumpstrahlung relevanten Spektralbereich transparent ist und an seiner Außenseite mit einer dielektrischen Verspiegelung versehen ist, durch die die für den Anregungsprozeß notwendigen Spektralanteile in das Innere des Pumprohres zurückreflektiert werden, andere Spektralanteile aber durchgelassen werden.

5. Festkörperlaser nach Anspruch 2, dadurch gekennzeichnet, daß das Rohr (2) vorzugsweise aus Keramik gefertigt ist und an seiner Innenwandung hohe diffuse Rückstreufähigkeit für die Anregungsspektralanteile besitzt.

6. Festkörperlaser nach den Ansprüchen 1 und 2, dadurch gekennzeichnet, daß die Pumplichtquelle (2, 9) mit einer zentralen Halterung versehen ist, in die ein Lasermaterial in Form eines kreiszylindrischen Stabes, eines Rohres oder eines Parallelepipeds (Slabs) einsetzbar ist.

7. Festkörperlaser nach Anspruch 1, dadurch gekennzeichnet, daß als Gas für die Pumplichtquelle Xenon, Krypton oder ein Gemisch der beiden, sowie ggf. Additive eingesetzt werden, die die spektrale Energieverteilung des Pumplichtes an die Absorptionsverhältnisse des verwendeten Festkörperlasermaterials anpassen.

8. Festkörperlaser nach Anspruch 1 bis 7, dadurch gekennzeichnet, daß das Festkörper-Lasermaterial (1) koaxial zur Pumplichtquelle in einem geschlossenen Kreislauf mit einem gleichfalls koaxial vorgesehenen Turbogebläss (4, 6) und ebenfalls koaxial vorgesehenen Wärmeaustauscher (5) angeordnet ist.

9. Festkörperlaser nach einem der Ansprüche 1 bis 8, dadurch gekennzeichnet, daß das Festkörper-Lasermaterial (1) innerhalb des offenen Rohres (2) von einem weiteren geschlossenen transparenten Rohr (16) umgeben ist, wobei der zwischen Festkörper-Lasermaterial (1) und dem weiteren Rohr (16) gebildete Raum von einem flüssigen Kühlmittel durchströmt ist.

Fig. 1

Fig. 2

Fig. 3

| | Europäisches Patentamt | **EUROPÄISCHER RECHERCHENBERICHT** | Nummer der Anmeldung |
| | | | **EP 90 11 0521** |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 236 670 (ROFIN-SINAR LASER GmbH) <br> * Figuren 1,2 <br> * & DE-U- 8 606 977 (Kat. D) <br> − − − | 1 | H 01 S 3/0915 <br> H 01 S 3/042 |
| A | US-A-3 265 989 (K. GÜRS) <br> * Spalte 1, Zeilen 30-42; Spalte 3, Zeilen 10-36 * <br> − − − | 1 | |
| A | GB-A-2 151 394 (BATTELLE INSTITUT) <br> * Zusammenfassung <br> * & DE-A-3 344 714 (Kat. D,A) <br> − − − − − | 1 | |
| | | | **RECHERCHIERTE SACHGEBIETE (Int. Cl.5)** |
| | | | H 01 S |

Der vorliegende Recherchenbericht wurde für alle Patentansprüche erstellt

| Recherchenort | Abschlußdatum der Recherche | Prüfer |
|---|---|---|
| Den Haag | 06 Februar 91 | GALANTI M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument